# EUROPEAN PATENT APPLICATION

(11) **EP 2 428 689 A1**
(43) Date of publication of application: **14.03.2012**
(21) Application number: 10176009.8
(22) Date of filing: 09.09.2010
(51) Int. Cl.: F16B 13/06, F16B 13/12

(54) **Percussion anchor assembly and a fastening adaptor**

(71) Applicant: Yow Cheng Co., Ltd., Alian Township Kao hsiung 822 (TW)
(72) Inventor: Hsu, Tai-Ping, 822, Kaohsiung County (TW)
(74) Representative: Chaillot, Geneviève

(57) **Abstract**

An expansible anchor assembly (4) includes an expansion sleeve (41) and an anchor bolt (42) plugging and expanding the expansion sleeve (41). The expansion sleeve (41) includes a first end (411), a second end (412), an expansible member (413) adjacent to the second end (412) that is divided into expansible segments (4132) by slits (4131), and a bore (414) defined in the expansion sleeve (41) for communicating the first end (411) with the second end (412). A groove (415) is annularly formed on the expansion sleeve (411), and a distance (D) from the groove (415) to the second end (412) equals to 1/4-2/5 times a length of the expansion sleeve (41) for preventing an over length of the slits (4131), which is beneficial to the manufacture. During expansion, the expansible segments (4132) are completely expanded when the expansible member (413) is subjected to a thrust from the anchor bolt (42) to promote the anchoring force and avoid damaging a working wall (5).

## Description

### BACKGROUND OF THE INVENTION

### 1. Field of the Invention

The present invention relates to a bolt anchoring device, particularly to an expansible anchor assembly and its adapted fastening device.

### 2. Description of the Related Art

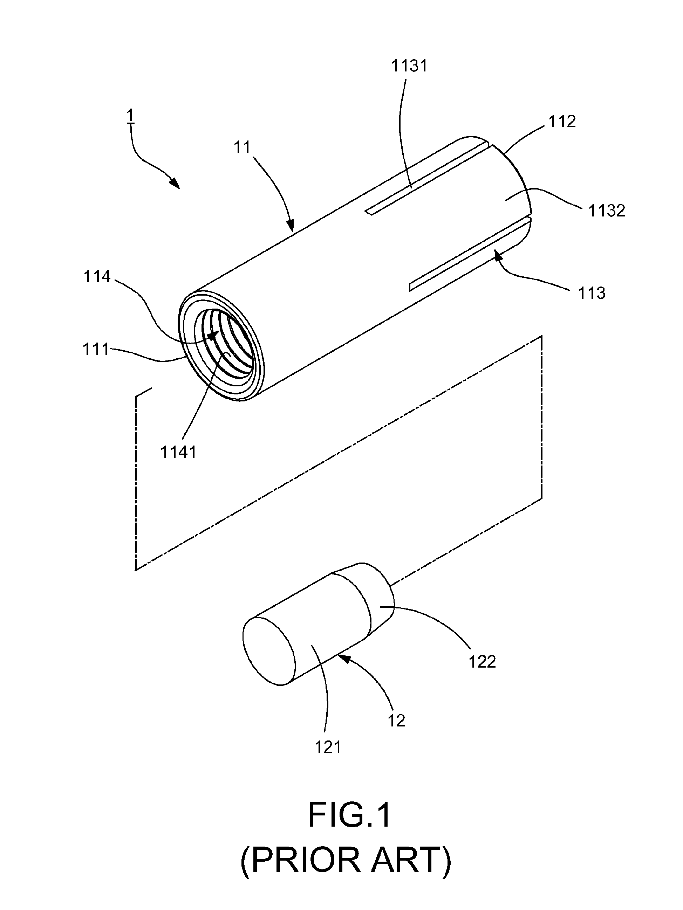

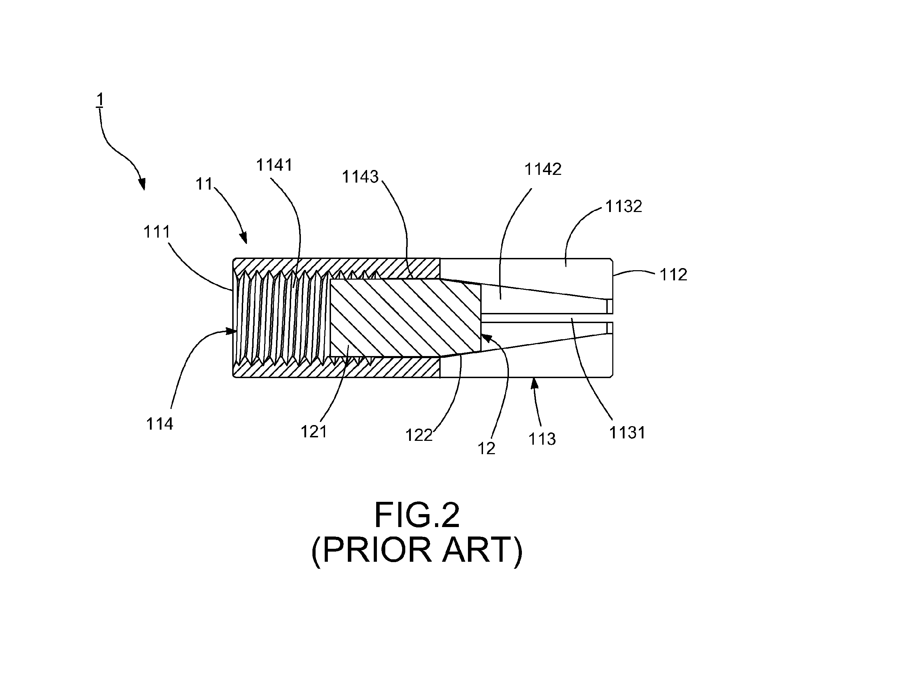

Figs. **1** and **2** disclose a conventional expansible anchoring device **1.** The anchoring device **1** includes an expansion sleeve **11** and an anchor bolt **12** extending through the expansion sleeve **11** for an expansion. Wherein, the expansion sleeve **11** includes a receiving end **111,** an abutting end **112** to contact with a surface of the wall, and an expansible portion **113** having multiple slots **1131** extending from the abutting end **112** and dividing the portion **113** into expansible segments **1132** disposed adjacent to the abutting end **112,** and a bore **114** defined within the expansion sleeve **11** for communicating the receiving end **111** with the abutting end **112**. Further, an inner wall of the sleeve **11** has a threaded portion **1141** disposed close to the receiving end **111,** a propelling leg **1142** disposed close to the abutting end **112,** and a supporting portion **1143** disposed between the threaded portion **1141** and the propelling leg **1142**. The propelling leg **1142** is formed into a cone shape tapered from the supporting portion **1143** toward the abutting end **112**. In addition, the anchor bolt **12** includes a plug body **121** for extending through the supporting portion **1143** and an insert **122** extending outwardly from the plug body **121** for abutting with respect to the propelling leg **1142**.

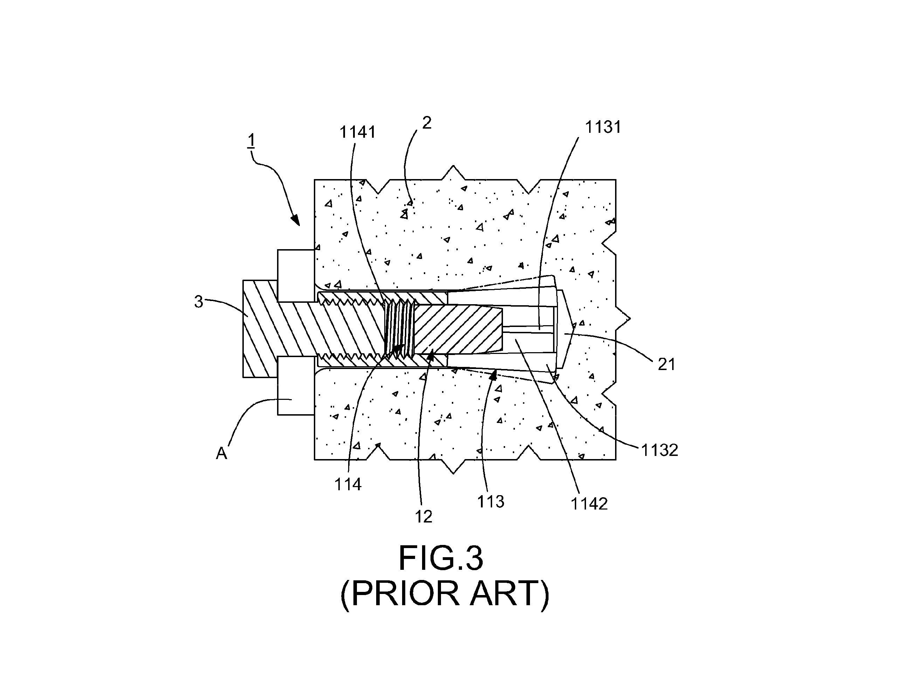

Referring to Fig. **3****,** in operation, the expansion sleeve **11** of the anchoring device **1** is subjected to a knocking force and plugged a pre-drilling hole **21** of a wall **2** so as to fix the anchoring device 1 therein. Further, the insert **12**2 of the anchor bolt **12** thence moves toward the propelling leg **1142** when users use a tool (not shown) to axially push the plug body **121** through the bore **114** of the sleeve, with the result that the expansible portion **113** subjected to an outward expansion force makes the expansible segments **1132** expanded to maintain the anchoring force. Then, a screw **3** could be screwed along the threaded portion **1141** for accomplishing the installation of the anchoring device **1**.

Generally, the expansible portion **113** along with the slits **1131** is prolonged for which to be efficiently expanded under the pushing force of the anchor bolt **12**. It is because the anchor bolt **12** easily lacks sufficient moment force and fails to completely widen the expansible segments **1132** of the portion **113** in case the expansion portion **113** is designed quite shorter. In contrast, the expansion portion **113** designed quite longer as shown in the aforementioned convention configuration may allow the anchor bolt **12** to successfully expand the expansion portion **113,** but at the beginning when the portion **113** starts to expand, the expansion turns to direct against the hole **21,** which restricts the pursuing expanding and renders the expansion portion **113** unable to be spread as dotted in Fig. **3****,** namely the dimension of the expansion is diminished and hence the anchoring force of the device **1** is influenced. If the expansion portion **113** is otherwise over-expanded, the pre-drilled hole **21** would be subjected to a huge pressure, which however results in breaking or damaging the wall **2** during operation and decreasing the anchoring force. To a practical experiment, as it is the anchoring device **1** can only be slightly but not thoroughly expanded even though the anchor bolt **12** bears a huge knocking force.

Still further, when the user pushes and directs the anchor bolt **12** against the propelling leg **1142,** he or she cannot exactly judge whether the anchor bolt **12** is completely plugged in the propelling leg **1142** or not, instead, they merely determine in light of their experiences. The expansible portion **113** is over lengthened, with the result that the user usually cannot be successful in expecting the propelling or anchoring journey of the anchor bolt **12** destined for the propelling leg **1142.** In such a situation, the anchor bolt **12** fails to widen the propelling leg **1142** completely, which results in decreasing the anchoring force of the expansible portion 113, even deteriorating or fading away the anchoring force in case that the anchor bolt **12,** which does not completely rest against the propelling leg **1142,** is subjected to any external vibration and thus slipped out of the propelling leg **1142.** Therefore, the fixing effect is easily affected.

Furthermore, in view of the over-length expansible portion **113** along with the prolonged slots **1131** and the propelling leg **1142** in a cone shape, if an overlarge force imposed on the cutting of the slots **1131** would easily render the slots to lose a support and become deformed during cutting of the manufacture, which however increase the difficulty of shaping by relevant cutting tools.

### SUMMARY OF THE INVENTION

The object of the present invention is to provide an expansible anchor assembly and its fastening adaptor which facilitates the convenience of manufacture and attains to expand completely without damaging the anchored wall for increasing the anchoring force thereof.

An expansible anchor assembly of the present invention comprises an expansion sleeve and an anchor bolt extending through the expansion sleeve for expanding the expansion sleeve. Wherein, the expansion sleeve includes a first end, a second end, an expansible member disposed adjacent to the second end, on which multiple slits axially extend from the second end for dividing the expansible member into expansible segments, a bore defined inside the expansion sleeve for communicating the first end with the second end, and a groove annularly formed at a periphery of the sleeve. An inner wall of the expansion sleeve includes a threaded portion disposed adjacent to the first end, a propelling leg disposed adjacent to the second end, and a supporting portion disposed between the threaded portion and the propelling leg. A proportion of distance from the groove to the second end equals to 1/4-2/5 times a length of the expansion sleeve. Furthermore, the anchor bolt comprises a plug body for extending through the supporting portion and an insert extending outwardly from the plug body for being in radial abutment against the propelling leg. By means of such a proportion, the present invention prevents the slits from being set by an over length, which not only develops the convenience of manufacture but renders the expansible segments able to widen axially starting from the groove for completely expanding the expansible member, so as to raise the anchoring force of the present invention and avoid damaging the wall during expansion.

A fastening device of the present invention adapted to the instant expansible anchoring assembly comprises a shank, an adjustable assembly engaged with the shank, an elastic unit situated in the adjustable assembly for the shank to penetrate therethrough. Wherein, a knocking end is formed on one end of the shank, and a pushing end is formed on the other end thereof for inserting into the expansible anchoring assembly; the adjustable assembly includes a first body penetrated by the shank and a second body capable of displacing along the shank for cooperating with the first body. The first body and the second body oppositely forming respective first slots and second slots disposed at intervals, every two adjacent first slots form a first rib, and every two adjacent second slots form a second rib, the first body and the second body connect with each other by mutually engagement the first and the second slots with the second and the first ribs so as to adjust a projecting length of the shank from the adjustable assembly. Further, a room is formed within the second body for receiving the elastic unit.

The advantages of the present invention over the known prior arts will become more apparent to those skilled in the art upon reading following descriptions and the accompanying drawings.

### BRIEF DESCRIPTION OF THE DRAWINGS

- Fig. 1: is an exploded view showing a conventional anchoring assembly;
- Fig. 2: is a cross-sectional view showing of Fig. 1;
- Fig. 3: is a schematic view showing of Fig. 1 in operation;
- Fig. 4: is an exploded view showing a first embodiment of the present invention;
- Fig. 5: is a cross-sectional view showing of Fig. 4;
- Fig. 6: is a schematic view showing of Fig. 4 in operation;
- Fig. 7: is a schematic view showing a second preferred embodiment of the present invention;
- Fig. 8: is an exploded view showing a third preferred embodiment of the present invention;
- Fig. 9: is a schematic view showing of Fig.8 in operation; and
- Fig. 10: is another schematic view showing of Fig. 8 in operation.

### DETAILED DESCRIPTION OF THE PREFERRED EMBODIMENTS

Before in greater detail, it is noted that the like elements are denoted by same reference numerals throughout the disclosure.

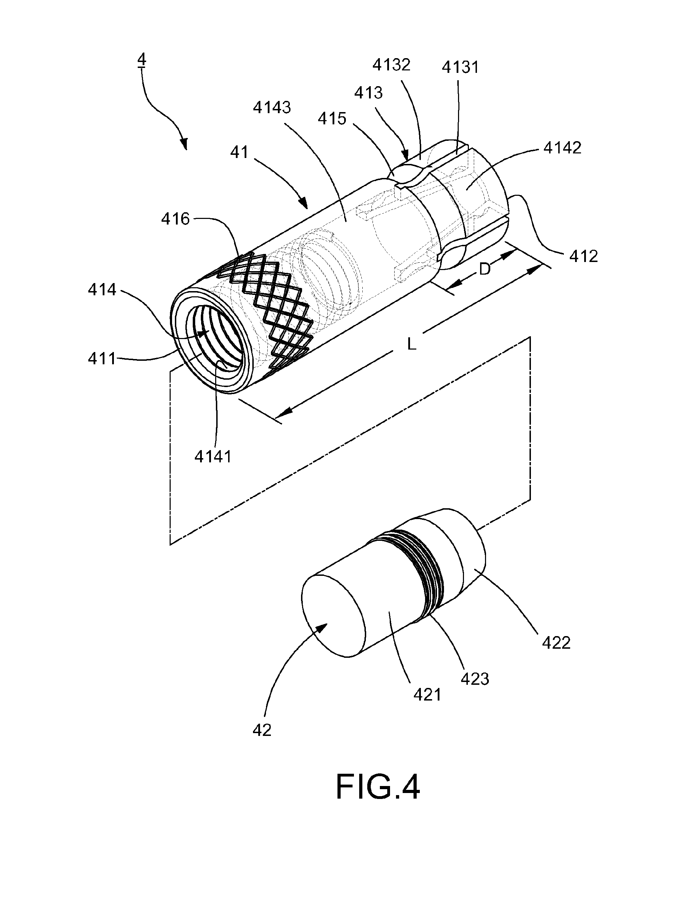

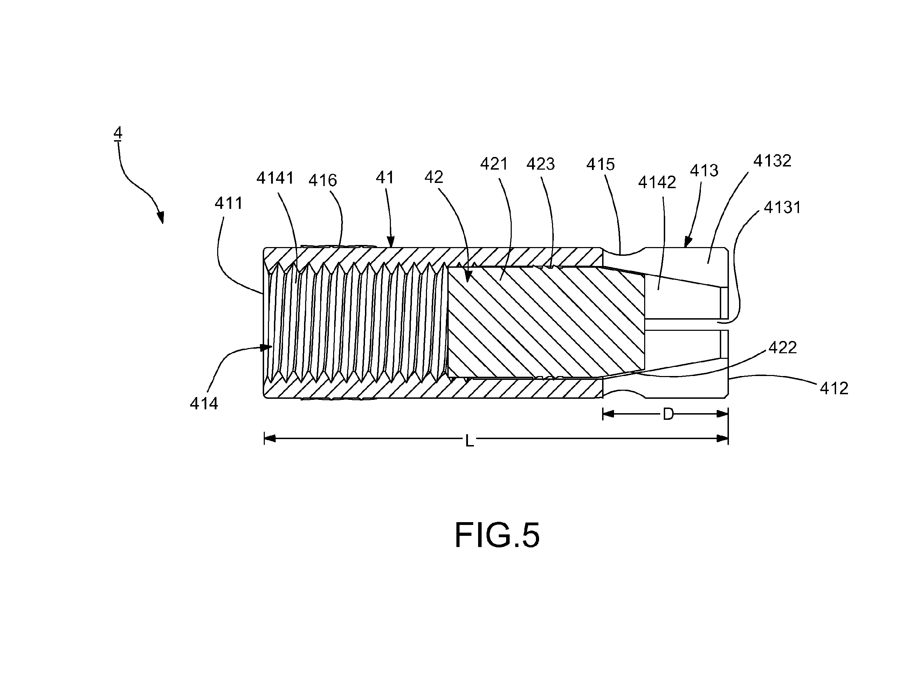

Figs. **4** and **5** show a first preferred embodiment of the present invention. An expansible anchoring assembly **4** comprises an expansion sleeve **41** and an anchor bolt **42** plugging or extending through the expansion sleeve **41** for an expansion. Wherein, the expansion sleeve **41** includes a first end **411,** a second end **412,** an expansible member **413** disposed adjacent to the second end **412** on which a plurality of slits **4131** axially extend from the second end **412** for defining a plurality of expansible segments **4132,** a bore **414** defined inside the expansion sleeve **41** for communicating the first end **411** with the second end **412**. An inner wall of the expansion sleeve **41** further includes a threaded portion **4141** disposed adjacent to the first end **411,** a propelling leg **4142** disposed adjacent to the second end **412**, and a supporting portion **4143** disposed between the threaded portion **4141** and the propelling leg **4142**. The propelling leg **4142** is extendedly formed into a cone shape tapered from the supporting portion **4143** to the second end **412**.

In addition, the expansion sleeve **41** further includes a groove **415** annually disposed at a periphery thereof, and a diameter ***D*** between the groove **415** and the second end **412** equals to 1/4 (0.25)∼2/5 (0.4) times a length ***L*** of the expansion sleeve **41**. Preferably, at the periphery of the expansible sleeve **41,** maybe disposed about the groove **415,** a plurality of anti-loosen ribs **416** are disposed. With regard to the slits **4131**, the slits **4131** may be extended in a length at least as the same as the distance **D** between the second end **412** and the groove **415**, or alternatively, to be extended beyond the groove **415**, namely, exceeding the distance **D**. It is ideal that the extended length of the slits **4131** is extended beyond 1 centimeter upper than the groove **415**. In the preferred embodiment, the slits **4131** are designed to extend beyond the groove **415** as an example.

The anchor bolt **42** comprises a plug body **421** for extending through the supporting portion **4143** and an insert **422** extending outwardly from the plug body **421** for being in radial abutment against the propelling leg 4121. Also in the preferred embodiment, the plug body **421** includes a plurality of annular ribs **423** disposed thereon.

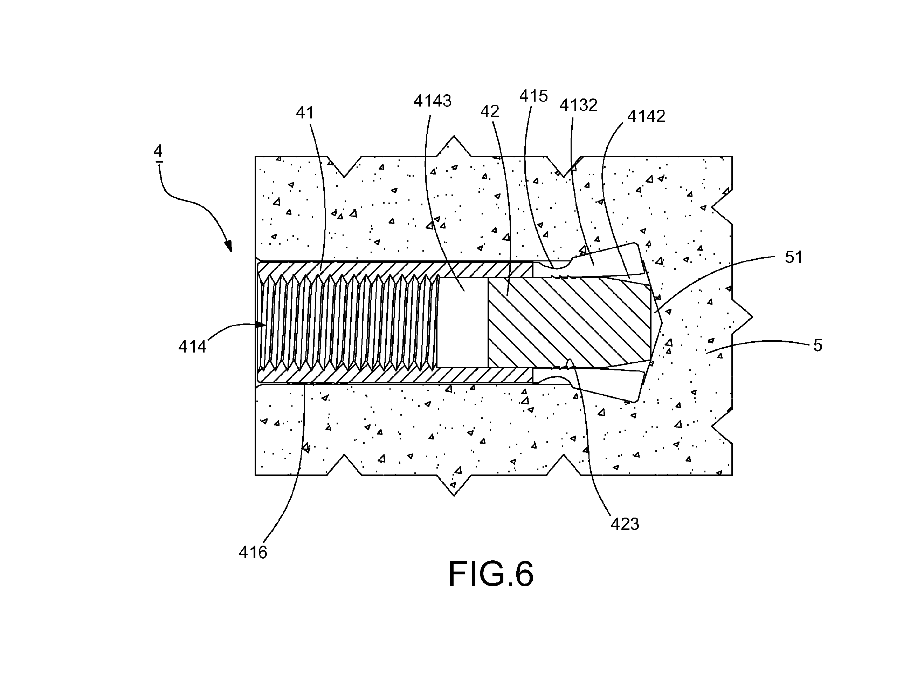

In operation, as shown in Fig. **5** and Fig. **6****,** when the expansible anchor assembly **4** is initially inserted into a pre-drilling hole **51** of a wall **5** via a knocking force, users would penetrate a tool (not shown) through the bore **414** for pushing the anchor bolt **42** to move from the supporting portion **4143** to the conical propelling leg **4142**. At the same time, the configuration of the groove **415** substantially attenuates the sleeve thickness of the place at which the groove **415** is located on the expansible anchor assembly **41** so as to reduce the rigidity of the expansible segments **4132**. Thus, the anchor bolt **42** provided with sufficient moment force is allowed thrusting into the propelling leg **4142**, so that concurrently the expansible segments **4132** could be bend outward starting from the groove **415** for densely fitting within the hole **51**. In addition, the distinct proportion as defined would also reduce the difficulty for cutting or shaping the slits and hardly become deformed even though the slits **4131** are subjected to an overlarge force during the cutting procedure, which is beneficial to increase the convenience of manufacture. Also, the smaller contacting area between the expansible member **413** and the hole **51** is conducive to a reduced pressure imposed on the hole **51,** so as to avoid damaging the wall **5** during expansion or widening of the expansible segments **4131** of the expansible member **413**. The shorter length of slits **4131** not only benefits the fall in manufacturing time but renders the journey of pushing the anchor bolt **42** toward the propelling leg **4142** become shorter as well for the user to easily and completely rest the anchor bolt **42** against the propelling leg **4142**. Thus, the expansible segments **4132** can be fully widened and expanded by the force exerted from the anchor bolt **42** for promoting the anchoring force of the expansible member **413**. As it is the distance **D** from the groove **415** to the second end **412** smaller than 2/5(0.4) times the length **L** of the expansion sleeve **41**, it prevents from over-lengthening the slits **4131** and avoids great difficulties in manufacturing and breaking the wall during expansion of the expansible member **413**. Besides, the distance **D** from the groove **415** to the second end **412** larger than 1/4(0.25) times the length **L** of the expansion sleeve **41** promotes the expansible member **413** to be fully expanded and widened. As a result, the distinct distance **D** is designed to preferably increase the anchoring force of the expansible anchoring assembly **4**.

Still further, the arrangement of the anti-loosen ribs **416** disposed around the periphery of the expansible sleeve **41** could increase the friction resistance between the sleeve **41** and the hole **51,** so as to attain a dense engagement of the expansible anchor assembly 4 with the hole **51** of the wall **5.** Accompanying with the annular ribs **423** disposed on the plug body **421** of the anchor bolt **42,** such configuration further allows the ribs **423** to engage with the slits **4131** when the anchor bolt **42** is completely pushed or inserted into the propelling leg **4142,** so as to prevent the anchor bolt 42 from slipping out of the propelling leg **4142** and thus maintain the anchoring force. Moreover, once the anchor bolt **42** abuts against the propelling leg **4142** for a complete expansion, the anchor bolt **42** threatened with any external vibration is hardly slip out of the leg **4142,** which thus reinforces the fixing and anchoring capability of the expansible anchor assembly **4**. Thereafter, a screw (not shown) could be screwed along the threaded portion 4141 for accomplishing the installation of the anchoring device **1**.

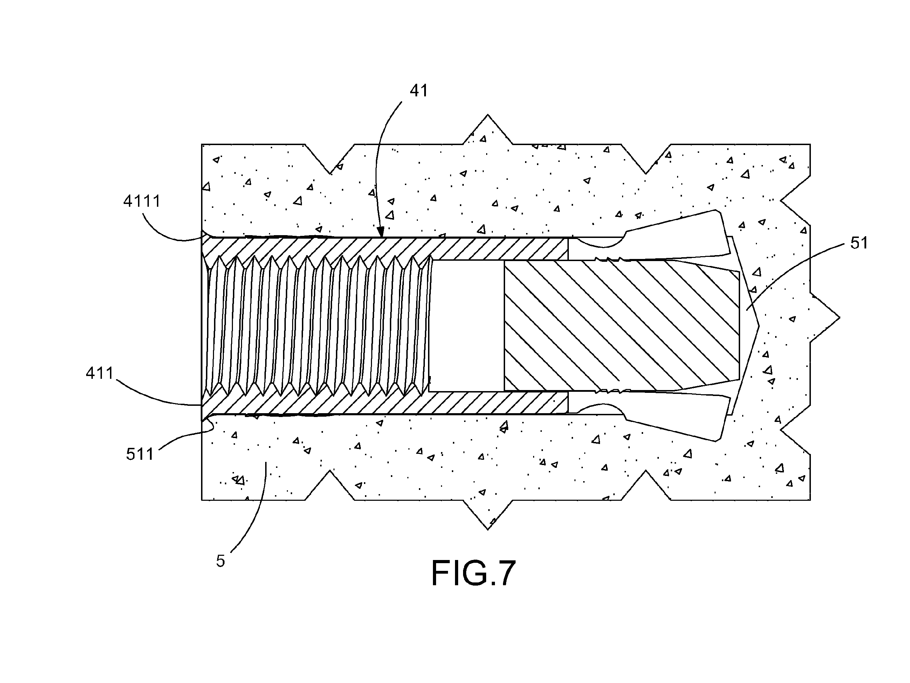

Fig. **7** shows a second preferred embodiment of the present invention. An expansible anchoring assembly **4** different from the previous embodiment particularly comprises a convex portion **4111** extending outward from the first end **411,** whose diameter is larger than the sleeve diameter. When the wall **5** is pre-drilled for digging a hole **51,** it is common to form a beveled and funnel-like surface **511** at the surface of the hole **51**. In virtue of the design of the convex portion **4111** that preferably matches and engages with the beveled surface **511,** the expansion sleeve **41** can be fitly anchored in the hole **51** of the wall **5** to enhance the anchor force.

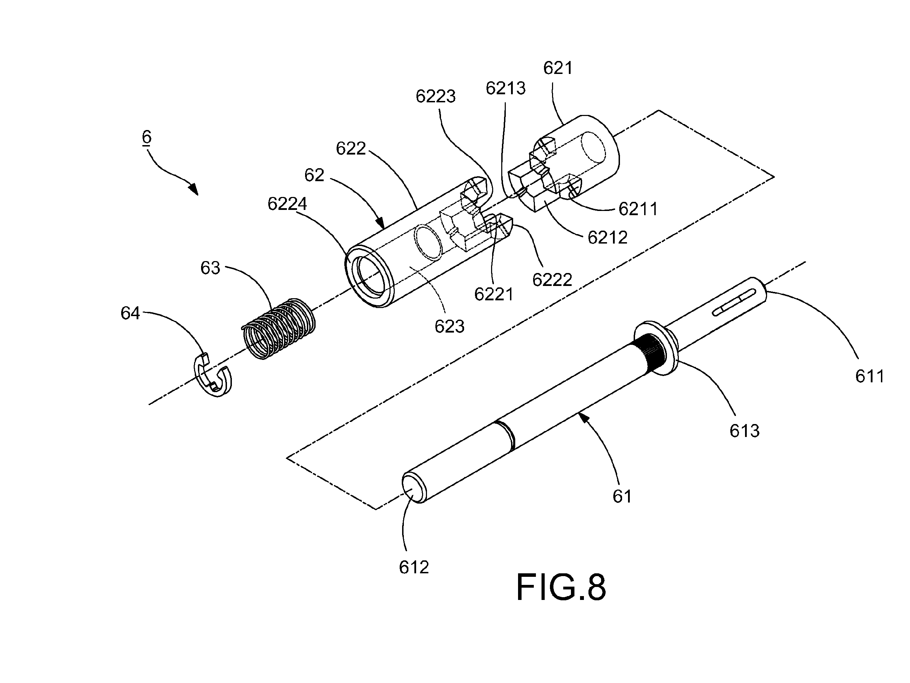

Referring to Fig. **8** shows a third embodiment of the present invention. The expansible anchoring assembly as aforementioned can cooperate with a fastening device **6**. The fastening device **6** comprises a shank **61**, an adjustable assembly **62** engaged with the shank **61**, an elastic unit **63** situated in the adjustable assembly **62** for the shank **61** to penetrate therethrough, and a limiting plate **64** disposed thereon for keeping the elastic unit **63** inside the adjustable assembly **62.** Wherein, a knocking end **611** is formed on one end of the shank **61,** and a pushing end **612** is formed on the other end thereof for inserting into the expansible anchoring assembly.

In connection with the adjustable assembly **62**, it comprises a first body **621** penetrated by the shank **61**, and a second body **622** capable of displacing along the shank **61** for cooperating with the first body **621**. The shank **61** can be designed to integrate with the first body **621**, or the shank **61** can use a blocking portion **613** projecting therefrom to integrate with the first body **621**. Herein, the design of the blocking portion **613** is adopted. Further, far from the first body **621**, the second body **622** forms a distal end **6224**. The first body **621** and the second body **622** oppositely form respective first slots **6211** and second slots **6221** disposed at intervals. Every two adjacent first slots **6211** form a first rib **6212**, and every two adjacent second slots **6221** form a second rib **6222**. To promote the firm engagement between the slots **6211,6221** and the ribs **6212,6222**, the first slots 6211 and the first ribs **6212** respectively have the structure of first engaging parts **6213**. Relative to the first engaging parts **6213**, second engaging parts **6223** are formed on the second slots **6221** and the second ribs **6222** as well. A room **623** is also formed within the second body **622** for receiving the elastic unit **63**.

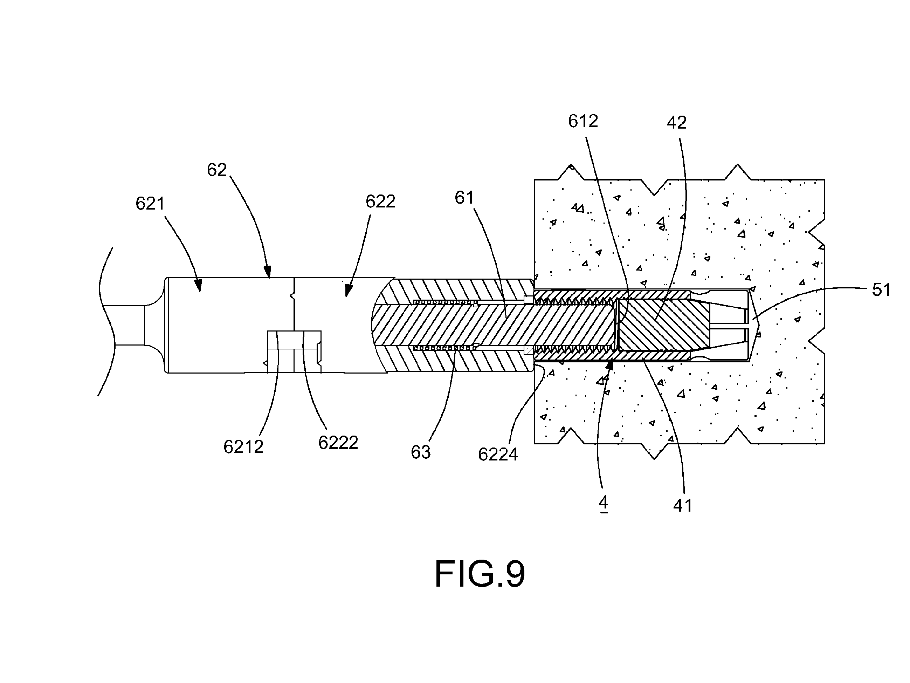

Referring to Fig. **9**, when users want to force the expansion sleeve **41** of the anchoring assembly 4 into the pre-drilling hole **51**, they should adjust, namely rotate the shank **61** integrating with the first body **621** or rotate the second body **622** so as to fitly prop the first rib **6212** against the second rib **6222**. During adjustment, the elastic unit **63** susceptible of a compression from the second body **622** would restore its elasticity, by which the first ribs **6212** and the second ribs **6222** can turn to engage with each other. Thence, the projecting length of the shank **61** from the second body **622** could be shortened, which allows the pushing end **621** to push the expansion sleeve 41 into the hole **51** without touching the anchor bolt **42** when the distal end **6224** of the second body **621** fitly reaches the wall surface. Thus, the expansion sleeve **41** is initially anchored inside the wall **5**.

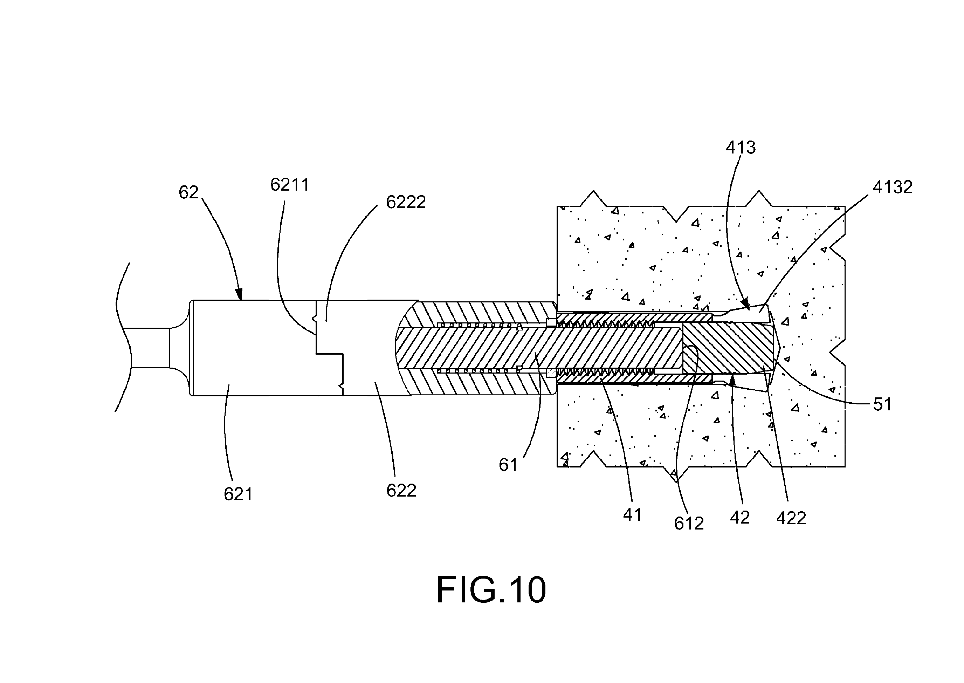

Continuing with the aforementioned, Fig. **10** shows that when the expansion sleeve **41** is anchored into the hole **51**, users should then adjust the adjustable assembly **62** again, that is, rotate the first or the second body **621,622** to render the second ribs **6222** able to snap into the first slots **6211** for a relative engagement. The shank **61** would project longer, and the projecting length would be preferably equal to the route distance of pushing the anchor bolt **42**, so that the pushing end **612** accurately propel the insert **422** of the anchor bolt **42** end to the propelling legs **4142** and completely push the expansible segment **4132** of the expansible member **413** open to increase the anchor force. Therefore, the present invention not only solves the problem of failing to thoroughly anchor the bolt into the wall hole but increases the using convenience.

To sum up, the present invention takes advantage of the groove annually disposed around the expansible sleeve and a distance measured from the groove to the second end that is 1/4-2/5 times the length of the expansion sleeve. Accordingly, the present invention prevents the slits to be set in an over length, which not only develops convenience of the manufacture but renders the expansible segments able to widen starting from the groove for completely expanding the expansible member so as to raise the anchoring force within a supporting wall.

While we have shown and described the embodiment in accordance with the present invention, it should be clear to those skilled in the art that further embodiments may be made without departing from the scope of the present invention.

## Claims

1. An expansible anchor assembly (4) comprising an expansion sleeve (41) and an anchor bolt (42) plugging said expansion sleeve (41) for expanding said expansion sleeve (41); wherein, said expansion sleeve (41) includes a first end (411), a second end (412), an expansible member (413) disposed adjacent to said second end (412), and a bore (414) defined inside said expansion sleeve (41) for communicating said first end (411) with said second end (412) and allowing said anchor bolt (42) to extend therethrough, said expansible member (413) having a plurality of slits (4131) axially extending from said second end (412), on which a plurality of expansible segments (4132) are divided thereby, an inner wall of said expansion sleeve (41) including a threaded portion (4141) in the proximity of said first end (411), a propelling leg (4142) disposed in the proximity of said second end (42), and a supporting portion (4143) disposed between said threaded portion (4141) and said propelling leg (4142), said propelling leg (4142) being in a conical extension tapered from said supporting portion (4143) toward said second end (412), said anchor bolt (42) comprising a plug body (421) for extending through said supporting portion (4143) and an insert (422) extending outwardly from said plug body (421) for being in radial abutment against said propelling leg (4142); **characterized in that** a groove (415) is annularly formed at a periphery of said expansion sleeve (41), a distance (D) measured from said groove (415) to said second end (412) being equal to 1/4-2/5 times a length of said expansion sleeve (41).

2. Then expansible anchor assembly as claimed in Claim 1, wherein, a convex portion (4111) extends outward from said first end (411) and provides a diameter larger than a diameter of said expansion sleeve (41).

3. The expansible anchor assembly as claimed in Claim 1, wherein, said slits (4131) are extended in a length at least equal to said distance (D) between said second end (412) and said groove (415).

4. The expansible anchor assembly as claimed in Claim 1, wherein, said expansion sleeve (41) has a plurality of anti-loosen ribs (416) formed on a periphery thereof.

5. The expansible anchor assembly as claimed in Claim 1, wherein, said plug body (421) of said anchor bolt (42) has a plurality of annular ribs (423) disposed thereon.

6. The expansible anchor assembly (4) as claimed in Claim 1, a fastening device (6) that is adapted to said expansible anchoring assembly (4) comprising:
a shank (61), an adjustable assembly (62) engaged with said shank (61), an elastic unit (63) situated in said adjustable assembly (62) for said shank (61) to penetrate therethrough, wherein, a knocking end (611) is formed on one end of said shank (61), and a pushing end (612) is formed on the other end thereof for inserting into said expansible anchoring assembly (4); said adjustable assembly (62) comprising a first body (621) penetrated by said shank (61) and a second body (622) capable of displacing along said shank (61) for cooperating with said first body (621), said first body (621) and said second body (622) oppositely forming respective first slots (6211) and second slots (6221) disposed at intervals, every two adjacent first slots (6211) forming a first rib (6212), and every two adjacent second slots (6221) forming a second rib (6222), said first body (621) and said second body (622) connecting with each other by mutually engagement said first and said second slots (6211,6221) with said second and said first ribs (6222,6212) so as to adjust a projecting length of said shank (61) from said adjustable assembly (62), a room (623) being formed within said second body (622) for receiving said elastic unit (63).

7. The fastening device as claimed in Claim 6, wherein, a blocking portion (613) projects from said shank (61) to fix and integrate with said first body (621).

8. The fastening device as claimed in Claim 6, wherein, a limiting plate (64) is disposed on said shank (61) for keeping said elastic unit (63) inside said adjustable assembly (62).

9. The fastening device as claimed in Claim 6, wherein, said first slots (6211) and said first ribs (6212) of said first body (621) respectively have first engaging parts (6213), and second engaging parts (6223) relative to said first engaging parts (6213) are formed on said second slots (6221) and said second ribs (6222) of said second body (622).
